# EUROPEAN PATENT APPLICATION

(11) **EP 4 826 636 A1**
(43) Date of publication of application: **21.10.2026**
(21) Application number: 25382401.5
(22) Date of filing: 16.04.2025
(51) Int. Cl.: G06Q 50/40, G08G 1/00, G06Q 10/02, G06Q 10/047, G06Q 10/1093, G08G 1/123

(54) **COMPUTER-IMPLEMENTED METHOD FOR COORDINATING A PASSENGER TRANSIT VEHICLE NETWORK TRIP REQUEST**

(71) Applicant: Blazhko, Kirill, 46500 Sagunto (ES)
(72) Inventor: Blazhko, Kirill, 46500 Sagunto (ES)
(74) Representative: Galbaian S.Coop.

(57) **Abstract**

Computer-implemented method for coordinating a passenger transit vehicle network trip request, wherein the vehicle network comprises a plurality of vehicles operating as part of the passenger transit vehicle network, the passenger transit vehicle network comprising one or more vehicle lines, more than one vehicle transiting on each line, each line having vehicle stops, the method comprising a trip request receiving step (S10) in which a passenger request is received, said request comprising information associated with an origin location and a desired destination of the passenger; a trip assigning step (S11) in which a boarding stop, an alighting stop and at least one vehicle is assigned to the passenger, a trip informing step (S12) in which the passenger is informed about an assigned trip, and an activation step (S13) in which a vehicle stop that corresponds to the assigned boarding stop of the passenger is activated for the assigned vehicle.

## Description

### TECHNICAL FIELD

The present invention is related to computer-implemented methods for coordinating a passenger network of vehicles.

### PRIOR ART

Urban transportation systems play a critical role in ensuring mobility within cities. A central component of these systems is the public transportation network, which can be defined as "a system of interconnected routes and modes of transit, such as buses, trains, and subways, that are designed to facilitate the movement of people within and between urban areas" (Hanson & Giuliano, 2017). Such networks are integral to urban planning efforts aimed at enhancing accessibility, reducing congestion and promoting sustainable transportation options.

A well-designed public transportation network, as defined by Van Nes and Bovy (2004), is an "integrated structure of routes, stations, and schedules designed to facilitate the efficient and effective movement of passengers within an urban or metropolitan area". As noted by the Transit Cooperative Research Program (2010), such networks are typically configured to balance speed, coverage and frequency, ensuring that they meet the travel demand across different geographic areas.

In a passenger transit network of buses, buses typically run along bus lines formed from a plurality of sequentially connected stops. In some urban areas it is common having multiple lines, some of which have common stops with each other. A bus running along a line is usually scheduled such that it has a departure time for each stop. However, facts like traffic congestion, dwell time or bus bunching make the bus transit network inefficient from many points of view. Furthermore, public transportation bus services are generally unaware of real-time passenger demand and unable to forecast future passenger demand. In other words, for any given vehicle in service, it is not known how many passengers will board or alight at the next stop. Unable to track passenger demand, reservations, or service capacity, public transportation bus services suffer from inefficiencies such as bus bunching, driving to empty bus stops, and serving urban areas with less demand while neglecting areas where service is needed more.

At the same time, those inefficiencies make the public transport bus services less attractive to potential users (longer waiting times, unpredictability, inconvenient bus lines and inconvenient locations of bus stops), which makes attracting new paying users even harder.

In the area of fixed vehicle (bus, train, etc.) routes which is a type of mass public transit based on operating buses following predefined fixed bus lines and stopping at predefined bus stops according to a predefined fixed timetable, there are various trip planner applications or software that allow to plan a trip, for example, Google maps". Some of them intend to provide live information to passengers, for example by using open data from GNSS/GPS sensors provided by public transport agencies, and some us crowdfunded data from passenger's devices.

WO2007147673A1 discloses a method for providing information to buses on the presence of passengers who want to travel to a particular destination. The method comprises the steps of receiving a request from a passenger to board a bus at the stop for a particular destination; identifying an approaching vehicle going to said particular destination and which would stop at the stop; forwarding said request to board to the identified vehicle; receiving a confirmation from the vehicle informing that said vehicle will stop at the stop to board the passenger; and forwarding to the passenger the confirmation received from the vehicle in response to the request to board.

US2022147946A1 discloses a method for real-time scheduling of transportation boarding times for the public urban transportation wherein based on a request from a passenger the retrieved bus data and the retrieved bus stop data, a boarding time to the user is transmitted.

### DISCLOSURE OF THE INVENTION

The object of the invention is to provide a computer-implemented method for coordinating passenger transit vehicle network trip requests, a vehicle network control system, a computer program and a non-transitory computer-readable storage medium, as defined in the claims.

A first aspect of the invention relates to a computer-implemented method for coordinating passenger transit vehicle network trip requests, wherein the vehicle network comprises a plurality of vehicles operating as part of the passenger transit vehicle network, the passenger transit vehicle network comprising one or more vehicle lines, more than one vehicle transiting on each line, each line having vehicle stops. The method comprises the following steps:
- a trip request receiving step in which a passenger request is received, the request comprising information associated with an origin location and a desired destination of the passenger;
- a trip assigning step in which a boarding stop, an exiting stop and at least one vehicle is assigned to the passenger, the boarding stop, the exiting stop and the at least one vehicle being assigned according to at least the following parameters:
   ∘ an estimated arrival time of the passenger from the origin location to the vehicle boarding stop;
   ∘ the location and the available passenger spots of the vehicle; and
   ∘ an estimated arrival time of the vehicle to the boarding stop;
   wherein, upon receiving a trip request, the method performs trip assignment computations based on offset values representing predicted positions of the passenger and the vehicle at a future point in time, said future point in time being determined to compensate an estimated processing time of said computations, the estimated processing time being static or dynamically derived based on one or more factors comprising historical computation durations, system load, time of day, calendar patterns, network latency, or predictive models including machine learning models trained to estimate said processing time;
- a trip informing step in which the passenger is informed about an assigned trip, wherein the assigned trip comprises information about the boarding stop location, the assigned vehicle, boarding time, time required for the passenger to arrive from the current location of the passenger to the boarding stop location, a walking path to the boarding stop, and an alighting stop; and
- an activation step in which a vehicle stop that corresponds to the assigned boarding stop of the passenger is activated for the assigned vehicle.

A second aspect of the invention relates to a vehicle network control system comprising a passenger module unit configured to communicate with passengers and a vehicle network module unit configured to locate and manage the plurality of vehicles and passengers. The system is configured to implement the method of the invention.

A third aspect of the invention relates to a computer program comprising a plurality of instructions which, when the program is executed by a computer, cause the computer to carry out the steps of the method of the invention.

A fourth aspect of the invention relates to a non-transitory computer-readable storage medium comprising a plurality of instructions which, when executed by a computer, cause the computer to carry out the method steps of the invention.

The method of the invention makes it possible to continuously optimize the passengers' needs and the passenger transit vehicle network efficiency. For example, the passenger transit vehicle network obtains a total awareness of the used capacity of the vehicles in the transportation network and of the expected boardings and alighting at each vehicle stop for each vehicle. Regarding the passengers, the invention is able to shorten waiting times for passengers as the vehicles can be more available where they are really needed.

Furthermore, due to the offset values, the method is able to estimate where each agent (vehicle and passenger) is expected to be within a certain time, what in the context of the invention is called "future spatio-temporal coordinate". The offset is applied to each parameter, the adjustment being determined based on a projected spatiotemporal state of the system at a future time, said projection accounting for system latency and processing time associated with concurrent request handling.

Therefore, a more reliable trip is assigned to the passenger and the vehicle, optimizing the needs of the passenger and the passenger transit vehicle network.

These and other advantages and features of the invention will become apparent in view of the figures and the detailed description of the invention.

### DESCRIPTION OF THE DRAWINGS

Figure 1 shows the flow diagram of a preferred embodiment of the method of the invention.
Figure 2 shows a graphical process flow of a bus in a bus line assigned to a passenger request according to one embodiment of the invention.
Figure 3 shows a schematic depiction of an embodiment of a computer configured to implement the method of the invention.

### DETAILED DISCLOSURE OF THE INVENTION

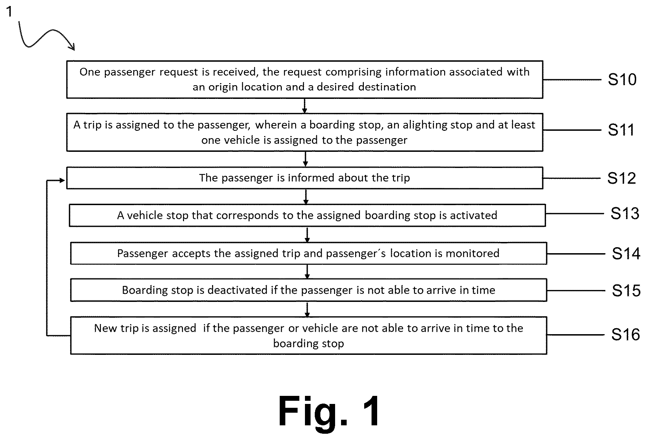

Figure 1 shows the flow diagram of one preferred embodiment of method 1 of the invention.

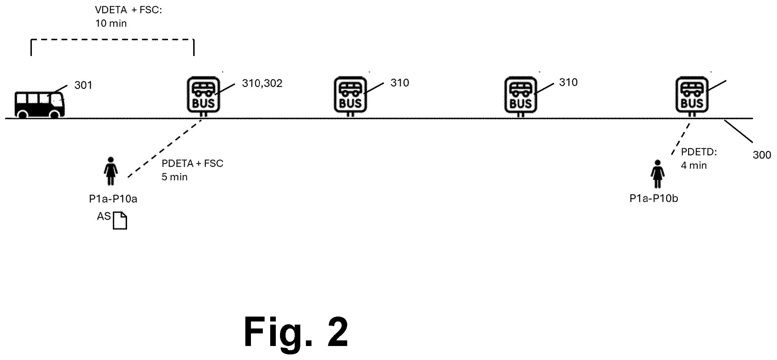

Figure 2 shows a graphical process flow of a vehicle 301, in a vehicle line 300 assigned to a passenger request according to one preferred embodiment of method of the invention.

The method of the invention is for coordinating and managing passenger transit vehicle network trip requests, wherein the vehicle network comprises a plurality of vehicles operating as part of the passenger transit vehicle network, the passenger transit vehicle network comprising one or more vehicle lines, more than one vehicle transiting on each line, each line having vehicle stops 310.

The method comprises the following steps as shown in figure 1 and 2:
- a trip request receiving step S10 in which a passenger request is received, said request comprising information associated with an origin location P10a and a desired destination P10b of the passenger P1a;
- a trip assigning step S11 in which a boarding stop 302, an alighting stop 303 and at least one vehicle 301 is assigned to the passenger, the boarding stop 302, the alighting stop 303 and the at least one vehicle being assigned according to at least the following parameters÷
   ∘ an estimated arrival time PDETA of the passenger P1a from the origin location P10a to the vehicle boarding stop 302;
   ∘ the location and the available passenger spots of the vehicle 301;and
   ∘ an estimated arrival time of the vehicle 301 to the boarding stop 302;
   wherein, upon receiving a trip request, the method performs trip assignment computations based on offset values (FSC) representing predicted positions of the passenger and the vehicle at a future point in time, said future point in time being determined to compensate an estimated processing time of said computations, the estimated processing time being static or dynamically derived, preferably the latter, based on one or more factors comprising historical computation durations, system load, time of day, calendar patterns, network latency, or predictive models including machine learning models trained to estimate said processing time;
- a trip informing step S12 in which the passenger P1a is informed about an assigned trip AS, wherein the assigned trip comprises information about the boarding stop location, the assigned vehicle, boarding time, time required for the passenger to arrive from the current location of the passenger to the boarding stop location, a walking path to the boarding stop, and an alighting stop; and
- an activation step S13 in which a vehicle stop 310 that corresponds to the assigned boarding stop 302 of the passenger is activated for the assigned vehicle 301.

In existing systems, execution of passenger requests requires a non-negligible amount of computational time. While acceptable for a small number of users, this time increases as the number of concurrent users grows. For example, when handling requests from a large number of simultaneous users, the system can experience increased processing delays. This is due, at least in part, to the cumulative load on shared system resources, such as CPU and memory, leading to degraded performance. Although the time increase may not be strictly linear with the number of users, the system can become overloaded under high demand, resulting in latency, timeouts, or reduced throughput. The main risk in such a situation is that for many users the results returned by the system would be useless, as while the system was busy with delayed computations, vehicles have been moving, and they will be not at locations where they were when computations started. The offset value used in the method takes into account parameters that allow an adjustment being determined based on a projected spatiotemporal state of the agents (vehicle and passenger) at a future time. When receiving a new request from a passenger, the method makes a temporal snapshot of all locations of the agents of the system (user, vehicles). However, the temporal snapshot is done not for the moment of "now", but for the moment of some time in the future. In other words, the system makes a temporal snapshot at FSC, which describes where each agent (user, vehicles) is expected to be in the future (based on their current location, speed, direction, timetable, etc.).Then the method runs the required computations with the locations of vehicles (and the user) envisaged at the FSC.

In one embodiment, the offset value of the estimated arrival time of the passenger is calculated according to one or more than one parameters selected from the passenger's current location, walking speed, direction of movement, route topology, traffic conditions, pedestrian infrastructure, time of day, day of the week, calendar context, weather conditions, historical passenger movement patterns and predictive models including machine learning models trained to estimate passenger arrival time.

In one embodiment, the offset value of the location and the available passenger spots of the vehicle 301 is calculated according to one or more than one parameters selected from the vehicle's current location, route segment, speed, heading, traffic conditions, scheduled or predicted boarding and alighting events, stop dwell times, passenger boarding patterns, vehicle type or configuration, occupancy sensor data, system-wide passenger flow, and predictive models including machine learning models trained to estimate vehicle availability.

In one embodiment, the offset value of the estimated arrival time of the vehicle 301 to the boarding stop 302 is calculated according to one or more than one parameters selected from the vehicle's current position, speed, acceleration, prior dwell time at previous stops, real-time traffic conditions, traffic light cycles, vehicle route characteristics, priority rules (e.g. bus lanes), road conditions, driver behaviour, historical arrival patterns, and predictive models including machine learning models trained to estimate vehicle arrival time.

In one embodiment, the method comprises automatically selecting the assigned vehicle 301 by evaluating, at the time of the request, whether the passenger P1a is predicted to reach the corresponding boarding stop 302 before the vehicle's estimated departure, and excluding from consideration any vehicles for which such arrival is not feasible.

For a better efficiency of the method, in one embodiment, the method comprises a trip accepting step S14, preferably booking the trip, wherein the passenger accepts the assigned trip and the passenger's location monitoring is activated for continuously re-calculating the passenger's estimated time of arrival and walking route to the vehicle boarding stop based on the passenger's current location and the estimated time of arrival of the assigned vehicle 301 to the the vehicle boarding stop 302 and offset value.

For the passenger, successfully using the method would mean sending a request in advance and then, when instructed with a notification, walk to the bus stop to board. Passenger who did not send a request may not exist for the method. Moreover, those passengers that did not confirm that they are walking to the boarding stop to arrive there on time, will be treated by the method as "no-show" and the vehicle will not wait for them.

In one embodiment, the vehicle can wait for the passenger (to a reasonable extent), but the passenger needs to request such waiting in advance and then actively confirm and then reconfirm, for example by physically moving, that the passenger is walking and coming on time to the boarding stop.

In one embodiment, the method comprises a step of notification to the passenger to start walking to the vehicle boarding stop 302 in order to arrive in time to catch the assigned vehicle 301. Preferably, the method comprises transmitting a notification to the passenger to initiate walking to the assigned vehicle boarding stop 302 at a calculated time, the time being determined such that the passenger arrives at the boarding stop shortly before the scheduled or estimated departure of the assigned vehicle 301, thereby minimizing passenger waiting time at the stop.

In one embodiment the method comprises receiving a confirmation from the passenger after issuing a walking notification, the confirmation indicating that the passenger has initiated movement toward the assigned boarding stop.

In one embodiment, the method comprises monitoring physical movement of the passenger using location data and/or sensor data to determine whether the passenger is walking toward the boarding stop and expected to arrive on time

In one embodiment, the method comprises a deactivation step S15 wherein the vehicle stop corresponding to the assigned boarding stop 302 of the passenger is removed from the assigned vehicle 301 with respect to said passenger, if the method determines that the passenger is unlikely to arrive at the boarding stop in time for boarding, preferably based on a lack of confirmation from the passenger or insufficient physical movement after having been instructed to initiate walking.

In one embodiment, if the passenger or the vehicle is not able to reach the assigned boarding stop on time, the method comprises a new trip assignation step S16 wherein a new trip is assigned to the passenger. This triggers again the method from step S12.

In one embodiment, the method comprises a step of calculating an estimated arrival time PDETD of the passenger from the alighting stop to the desired destination P11a, wherein the passenger P11a is informed in the trip informing step S13.

In one embodiment, the method comprises a step of dynamically reassigning the vehicle, the vehicle boarding stop and/or the alighting stop for the passenger according to the current location of the passenger, current location of the vehicle, traffic information and/or new passenger requests, applying the corresponding offset values.

Another aspect of the invention relates to a vehicle network control system comprising a passenger module unit configured to communicate with passengers and with a vehicle network module unit configured to locate and manage the plurality of vehicle. The system is configured to implement the method according to the method of the invention.

In one embodiment, the vehicle network module unit is configured to locate and manage the plurality of vehicles operating as part of the passenger transit vehicle network and to give instructions to the vehicle or the vehicle driver.

In one embodiment, the passenger module unit is configured to obtain the passenger requests for a vehicle trip. This passenger module is configured also to give information to the passenger about the assigned vehicle(s), the location of the boarding stop, the destination stop, the departure time or the trip itinerary, duration and also the walking route to the boarding stop or the destination stop.

In one embodiment, the vehicle network control system is configured to store historical data of the method and use a machine learning technique.

The machine learning technique may be, for example, a neural network, random forest model, regression model, or other suitable machine learning technique. The machine learning technique may include a convolutional neural network (CNN), a long short-term memory model, or a residual network (ResNet). The inputs to the machine learning technique may be any one or more of: a generated dynamic timetables, generated passenger vehicle itineraries, generated passenger itineraries, a time series of historical vehicle occupancy; a distance between vehicle stops; GPS travel logs from one or more vehicle; a time of day; a day of week; weather conditions and/or passenger's requests with the requested origin location and a desired destination.

Using machine learning is advantageous in that predictions can be made more accurate and efficient when large volumes of data are being considered, as the machine learning algorithms are able to easily identify trends and patterns in that data and continually improve in accuracy and efficiency as more data is processed by the algorithms over time.

The various components of the vehicle network control system can be provided as one of more pieces of computer operating on one or more computing devices. For example, the vehicle network control system may be implemented on a server or cluster of servers and the various components instantiated as software running on the server or across the cluster of servers. In other examples the system may be a distributed computer network and some or each of the components may be implemented as discrete computing devices.

In one embodiment, the vehicle network control system comprises at least one of the several components:
- An individual passenger spot database configured to store information about all passenger spots (passenger seats and standing places) that exist in vehicles. It includes information such as passenger spot type, vehicle that it belongs to, statuses (available, reserved, not available), relational data such as which reservations are assigned to it and at which dates and times, and optional features, among other information.
- An individual passenger spot reservation module configured to use individual passenger spot database to track and manage passenger spots as an inventory. It is configured to implement a life cycle flow for passenger spots by creating, reading, updating and deleting statuses (available, reserved, not available) and allowing their reservation by passengers.
- A passenger spot real-time connecting reservation module configured to use the individual passenger spot reservation module to reserve passenger spots in several vehicles (and thus multiple segments) for each reserved trip (connecting reservations for connected segments).
- A bus stop inventory database configured to store information about all bus stops in the transportation network, including information about their status (not activated, activated, not available, etc.), location, optional facilities, and signage, among other information.
- A bus stop activator module configured to use the bus stop database to track and manage bus stops as inventory. It is configured to implement a life-cycle flow for bus stops by creating, reading, updating and deleting their statuses (not activated, activated, not available, etc.) and allowing their activation and deactivation.
- A requests database configured to store information about all requests sent towards the system (passenger and their attributes, origin with attributes, destination with attributes, date and time of request), as well as the status of each request (active, completed, canceled, archived).
- A requests management sub-system configured to use the requests database to manage requests. It is configured to implement a life cycle flow requests by creating, reading, updating and deleting requests and their attributes in the requests database.
- A dynamic timetable component configured to use data from the individual passenger spot database, the individual passenger spot reservation module, the individual passenger spot connected reservation module for real-time departures, the bus stop database, the bus stop activator module, and the requests management sub-system to manage (create, read, update, delete) the dynamic timetables for vehicles and passengers in the system. Since it might take some time to receive reservation requests from passengers, it is configured to process them and communicate back the newly generated dynamic timetables (including new vehicle itineraries and new passenger itineraries), the dynamic timetable component is configured to generate dynamic timetables that start (commence) at some point in the future.
- A vehicle tracking sub-system configured to collect and store collects real-time and soft real-time location data for all vehicles in the system (location, coordinates, speed, direction).
- A vehicle itinerary module configured to use dynamic timetables to create vehicle Itineraries for each specific vehicle in the system. It is configured to communicate the itinerary stages (next stop, scheduled arrival time, scheduled departure time) and to track vehicles following those itineraries (by using data from vehicle location tracking module). It is configured to issue alerts to the system and to a vehicle driver if the vehicle falls behind or runs ahead the current vehicle itinerary or is expected to do so.
- A billing module configured to manage (create, read, update, delete) billing operations connected to user accounts of passengers in the system (top up, charge, apply discounts to balance and other transactions through create, read, update, delete actions).
- A connected reservation planner configured to allow passengers to plan their journeys by entering their desired start and end locations. The connected reservation planner is configured to poll connected the passenger spot real-time reservation module and/or the dynamic timetable component for capacity needed to complete the requested journey. It is configured to provide one or more trip options, including the estimated travel time, transfers, and walking distances. Passengers, therefore, have an option to select one of the provided trip options and make a reservation with the system.
- A passenger itinerary module configured to use dynamic timetables created by the dynamic timetable component to create passenger itineraries. For each individual passenger is configured to provide a passenger itinerary that includes all stages of a trip and actions needed to be done by the passenger: wait for a notification, walk to the bus stop, board a certain Vehicle, take a certain passenger spot in the vehicle, ride, alight at a certain time and/or location, transfer or connection (if needed), walk from the bus stop to the destination location.
- A dynamic travel assistant configured to provide soft real-time or real-time guidance to each passenger based on the information contained in their respective passenger itinerary. The main objective of the passenger travel assistant is to communicate to the passenger what the passenger shall do now and what the passenger shall do next, according to the specific passenger itinerary. Moreover, as the dynamic timetables generated by the dynamic timetable component can change any time, so can passenger itineraries. Therefore, the passenger travel assistant can be configured to alert a passenger when such updates happen or it can be configured to show only the most imminent action and stage of the passenger itinerary.
- A check-in sub-system configured to assist the system in tracking each individual reservation and its progress along its passenger Itinerary (and its stages) by providing an automatic and/or manual check-in (and check-out) functionality for each passenger boarding or alighting a vehicle. In addition to communicating to the system which passenger spots and with which status value shall be updated in the individual passenger spot database, it is also configured to provide information on which passengers have already boarded and/or alighted from each vehicle at if they have done it according to the scheduled time. The automatic check-in (and check-out) of passengers can be implemented with the following technologies: infra-red human detection, Bluetooth, face recognition, movement sensors, or a combination of those. The check-in sub-system can also allow manual check-ins by passengers. Check-in in another vehicle can trigger an automatic check-out from previously checked in vehicles.
- A vehicle driver terminal for vehicle drivers (human or machine) configured to communicate with the system. Its main objective is to convey the current vehicle itinerary specific to each given vehicle.
- A passenger terminal for passengers configured to communicate with the system. Its main objective is to convey the current passenger itinerary specific to each given passenger.

The method and system are organized as a system that receives requests from passengers, as well as continuously monitors its agents (vehicles and passengers) and gives them instructions in real time:
- Runs in parallel a non-stop loop for each vehicle:
   ∘ Monitors in real time the movement of the vehicle(s) and continuously re-calculates its estimated time of arrival at the next bus stop(s) (Vehicle Dynamic Estimated Time of Arrival, VDETA)
   ∘ Based on VDETA, calculates the Vehicle Dynamic Estimated Time of Departure (VDETD) from for each bus stop.
   ∘ Augments the timetable with VDETA and VDETD for each vehicle and each bus stop.
- For each passenger request:
   ∘ Calculates the walking distance of the passenger to the bus stop and derives the estimated time of arrival of the passenger at that bus stop.
   ∘ Identifies the current value of Future Spatiotemporal Coordinate (FSC).
   ∘ Based on FSC:
      ∘ Assigns the passenger request to the next matching (reachable) vehicle.
      ∘ Calculate Just-in-Time Boarding Time.
- Runs in parallel a non-stop loop for each confirmed passenger request (Active Passenger Request):
   ∘ Keeps monitoring the passenger's location and continuously re-calculates the passenger's (walking) estimated time of arrival at the bus stop(s) (Passenger Dynamic ETA - PDETA) based on the passenger's current location. Such a recurring re-calculation of a walking route to the bus stop can be a computationally intensive task (which takes time to complete) and the system will benefit from using FSC to provide valid and up-to-date results to users.
   ∘ Notifies the passenger to walk to the meeting point when their PDETA becomes equal (or N minutes) before the assigned vehicle's VDETD.
   ∘ Obtains a confirmation from the passenger that the passenger has started to walk to the bus stop.
   ∘ Monitors in real time the movement of the passenger and continuously re-calculates their Passenger Dynamic ETA - PDETA
- Runs in parallel a non-stop loop for each vehicle driver (or controller). Provides real-time recommendations:
   ∘ Provides updates on the timetable: exact expected time of arrival and the expected time of departure from the bus stop, which can be different from those listed in the timetable.
   ∘ If there are no passengers with valid PDETAs, recommends departing to the next bus stop earlier or according to the timetable.

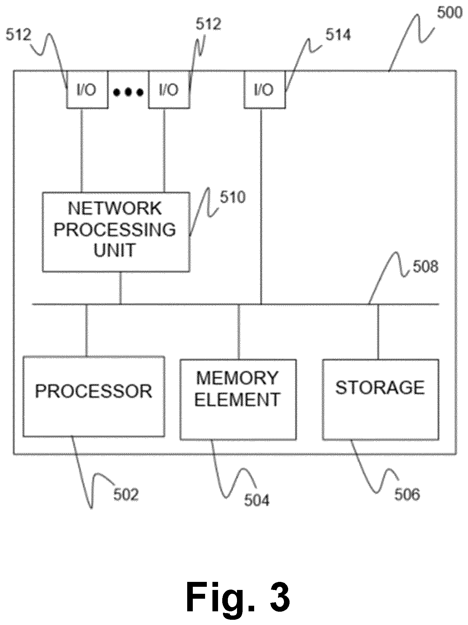

Figure 3 shows a schematic depiction of an embodiment of a computer 500 configured to implement the method 1 of the invention or to provide the bus network control system. In at least one embodiment, the computer 500 used to implement the method 1 of the invention may include one or more processors 502, one or more memory elements 504, storage 506, a bus 508, one or more network processor units 510 interconnected with one or more network input/output (I/O) interfaces 512, one or more I/O interfaces 514, and a computer program.

The computer program comprises a plurality of instructions which, when executed by the processor 502, cause the processor 502 to execute the steps of the method 1 of the invention. In at least one embodiment, the processor or processors 502 are at least a hardware processor configured to execute various tasks, operations, and/or functions for the computer 500 according to the software and/or the instructions configured for the computer 500, for example, in the computer program.

In at least one embodiment, the memory element(s) 504 and/or storage 506 are configured to store data, information, software, and/or instructions associated with the computer 500, and/or logic configured for the memory element(s) 504 and/or storage 506. In one embodiment of the computer 500, the computer program is stored in any combination of memory element(s) 504 and/or storage 506.

In one embodiment of method 1 of the invention, data necessary to implement the method 1, such as the ones described before, is stored in any combination of memory element(s) 504 and/or storage 506.

In at least one embodiment, the bus 508 may be configured as an interface that allows one or more elements of the computer 500 to communicate with each other to exchange information and/or data. The bus 508 may be implemented with any architecture designed to exchange control, data, and/or information between processors, memory/storage elements, peripheral devices, and/or any other hardware and/or software components that may be configured for the computer 500. In at least one embodiment, the bus 508 may be implemented as a rapid interconnection housed in the core, potentially using shared memory between processes (e.g., logic), which may allow efficient communication routes between processes.

In various embodiments, the network processor unit(s) 510 may enable communication between the computer 500 and other systems, entities, etc., via the network I/O interface(s) 512 (wired and/or wireless). In various embodiments, the network processor unit(s) 510 may be configured as a combination of hardware and/or software, such as one or more Ethernet controllers and/or interface controllers or cards, Fibre Channel (e.g., optical) driver(s) and/or controller(s), wireless receivers/transmitters/transceivers, baseband processor(s)/modem(s) and/or other similar network interface driver(s) and/or controller(s) now known or hereinafter developed to enable communications between the computer 500 and other systems, entities, etc. to facilitate the operations for the various embodiments of method 1 described herein. In various embodiments, the network I/O interface(s) 512 may be configured as one or more Ethernet ports, Fibre Channel ports, any other I/O port(s) and/or antenna(s)/antenna array(s) now known or hereafter developed. Thus, network processor unit(s) 510 and/or network I/O interface(s) 512 may include interfaces suitable for receiving, transmitting and/or otherwise communicating data and/or information in a network environment.

The I/O interfaces 514 allow input and output of data and/or information with other entities that may be connected to the computer 500. For example, the I/O interfaces 514 may provide a connection to external devices such as a keyboard, keypad, touch screen, and/or any other suitable input and/or output device now known or developed in the future. In some cases, the external devices may also include computer-readable (non-transitory) storage media such as database systems, USB memories, portable optical or magnetic disks, and memory cards. Still in some cases, external devices may be a mechanism for displaying data to a user, such as, for example, a computer monitor, display screen, or the like.

In various embodiments, the computer program can include instructions that, when executed, cause the processor(s) 502 to perform operations, which can include, but are not limited to, providing general computer control operations, interacting with other entities, systems, etc. described herein, maintain and/or interact with stored data, information, parameters, etc. (e.g., memory element(s), storage, data structures, databases, tables, etc.); combinations thereof; and/or the like to enable execution of operations necessary for the implementation of the method 1 of the invention.

In some cases, the computer program of the present embodiments may be available via a non-transitory computer-readable storage medium (e.g., magnetic or optical media, magnetooptical media, CD-ROM, DVD, memory devices, etc.). In some cases, non-transitory computer-readable storage media may also be removable. Other examples may include optical and magnetic disks, USB memories and smart cards that can be inserted into and/or otherwise connected to a computer for transfer to another computer-readable storage medium.

In one embodiment, the computer program runs in a distributed environment, i.e., part of the computer program runs on a first computer 500, and part of the computer program runs on a second computer, both computers 500 communicating with each other.

Another aspect of the invention relates to a computer program comprising a plurality of instructions which, when the program is executed by the computer 500, cause the computer 500 to carry out the steps of the method 1 of the invention.

Another aspect of the invention relates to a computer-readable storage medium comprising a plurality of instructions which, when executed by the computer 500, cause the computer 500 to carry out the steps of the method 1 of the invention.

## Claims

1. Computer-implemented method for coordinating a passenger transit vehicle network trip request, wherein the vehicle network comprises a plurality of vehicles operating as part of the passenger transit vehicle network, the passenger transit vehicle network comprising one or more vehicle lines, more than one vehicle transiting on each line, each line having vehicle stops (310), the method comprising:
- a trip request receiving step (S10) in which a passenger (P1a) request is received, said request comprising information associated with an origin location (P10a) and a desired destination (P10b) of the passenger (P1a);
- a trip assigning step (S11) in which a boarding stop (302), an alighting stop (303) and at least one vehicle (301) is assigned to the passenger, the boarding stop (302), the alighting stop (303) and the at least one vehicle being assigned according to at least the following parameters÷
∘ an estimated arrival time (PDETA) of the passenger (P1a) from the origin location (P10a) to the vehicle boarding stop (302);
∘ the location and the available passenger spots of the vehicle (301); and
∘ an estimated arrival time of the vehicle (301) to the boarding stop (302);
wherein, upon receiving a trip request, the method performs trip assignment computations based on offset values (FSC) representing predicted positions of the passenger and the vehicle at a future point in time, said future point in time being determined to compensate an estimated processing time of said computations, the estimated processing time being static or dynamically derived based on one or more factors comprising historical computation durations, system load, time of day, calendar patterns, network latency, or predictive models including machine learning models trained to estimate said processing time;
- a trip informing step (S12) in which the passenger (P1a) is informed about an assigned trip (AS), wherein the assigned trip comprises information about the boarding stop location, the assigned vehicle, boarding time, time required for the passenger to arrive from the current location of the passenger to the boarding stop location, a walking path to the boarding stop, and an alighting stop; and
- an activation step (S13) in which a vehicle stop (310) that corresponds to the assigned boarding stop (302) of the passenger is activated for the assigned vehicle (301).

2. Method according to claim 1, wherein the offset value (FSC) of the estimated arrival time of the passenger is calculated according to one or more than one parameters selected from the passenger's current location, walking speed, direction of movement, route topology, traffic conditions, pedestrian infrastructure, time of day, day of the week, calendar context, weather conditions, historical passenger movement patterns and predictive models including machine learning models trained to estimate passenger arrival time.

3. Method according to claim 1 or 2, wherein the offset value (FSC) of the location and the available passenger spots of the vehicle (301) is calculated according to one or more than one parameters selected from the vehicle's current location, route segment, speed, heading, traffic conditions, scheduled or predicted boarding and alighting events, stop dwell times, passenger boarding patterns, vehicle type or configuration, occupancy sensor data, system-wide passenger flow, and predictive models including machine learning models trained to estimate vehicle availability.

4. Method according to any of the preceding claims, wherein the offset value (FSC) of the estimated arrival time of the vehicle (301) to the boarding stop (302) is calculated according to one or more parameters selected from the vehicle's current position, speed, acceleration, prior dwell time at previous stops, real-time traffic conditions, traffic light cycles, vehicle route characteristics, priority rules, road conditions, driver behaviour, historical arrival patterns, and predictive models including machine learning models trained to estimate vehicle arrival time.

5. Method according to any of the preceding claims, wherein the method comprises automatically selecting the assigned vehicle (301) by evaluating, at the time of the request, whether the passenger (P1a) is predicted to reach the corresponding boarding stop (302) before the vehicle's estimated departure, and excluding from consideration any vehicles for which such arrival is not feasible.

6. Method according to any of the preceding claims, wherein the method comprises a trip accepting step (S14) wherein the passenger (P1a) accepts the assigned trip and the passenger's (P1a) location monitoring is activated for continuously re-calculating the passenger's estimated time of arrival and walking route to the vehicle boarding stop (302) based on the passenger's (P1a) current location and the estimated time of arrival of the assigned vehicle (301) to the vehicle boarding stop (302) and offset value (FSC).

7. Method according to claim 6, wherein the method comprises transmitting a notification to the passenger to initiate walking to the assigned vehicle boarding stop (302) at a calculated time, the time being determined such that the passenger arrives at the boarding stop shortly before the scheduled or estimated departure of the assigned vehicle (301), thereby minimizing passenger waiting time at the stop.

8. Method according to any of the preceding claims, wherein the method comprises a deactivation step (S15) wherein the vehicle stop corresponding to the assigned boarding stop (302) of the passenger is removed from the assigned vehicle (301) with respect to said passenger, if the method determines that the passenger is unlikely to arrive at the boarding stop in time for boarding, preferably based on a lack of confirmation or insufficient physical movement after having been instructed to initiate walking.

9. Method according to any of the preceding claims, wherein the method comprises a new trip assignation step (S16) wherein a new trip is assigned if the passenger (P1a) or the vehicle is not able to reach the assigned boarding stop (302) on time.

10. Method according to any of the preceding claims, wherein an estimated arrival time (PDETD) of the passenger (P1a) from the alighting stop (303) to the desired destination (P10b) is calculated and informed to the passenger (P1a) in the trip informing step (S13).

11. Method according to any of the preceding claims, comprising the step of dynamically reassigning the vehicle (301), the vehicle boarding stop (302) and/or the alighting stop (303) for the passenger according to the current location of the passenger, current location of the vehicle (301), traffic information and/or new passenger requests.

12. Vehicle network control system comprising a passenger module unit configured to communicate with passengers and with a vehicle network module unit configured to locate and manage the plurality of vehicles, **characterised in that** the system is configured to implement the method according to any of the preceding claims.

13. Vehicle network control system according to claim 12, wherein the vehicle network control system is configured to store historical data and is configured to use a machine learning technique for improving the efficiency of the method.

14. Computer program comprising a plurality of instructions which, when the program is executed by a computer (500), cause the computer (500) to carry out the steps of the method (1) according to any of claims 1 to 12.

15. Non-transitory computer-readable storage medium comprising a plurality of instructions which, when executed by a computer (500), cause the computer (500) to carry out the method steps (1) according to any of claims 1 to 12.
